(19)

Europäisches
Patentamt

European
Patent Office

Office européen
des brevets

(11) **EP 4 761 240 A1**

(12) **EUROPEAN PATENT APPLICATION**

(43) Date of publication:
    **17.06.2026  Bulletin 2026/25**

(21) Application number: **24315569.4**

(22) Date of filing: **12.12.2024**

(51) International Patent Classification (IPC):
    **H04N 19/11** (2014.01)        **H04N 19/176** (2014.01)
    **H04N 19/593** (2014.01)

(52) Cooperative Patent Classification (CPC):
    **H04N 19/593; H04N 19/11; H04N 19/176**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **GE KH MA MD TN**

(71) Applicant: **Beijing Xiaomi Mobile Software Co.,
    Ltd.**
    **Beijing Beijing 100085 (CN)**

(72) Inventors:
    • **Tissier, Alexandre**
      **Beijing, 100085 (CN)**

    • **Ghaznavi Youvalari, Ramin**
      **Beijing, 100085 (CN)**
    • **Abdoli, Mohsen**
      **Beijing, 100085 (CN)**
    • **Plowman, Frank**
      **Beijing, 100085 (CN)**

(74) Representative: **Zimmermann, Tankred Klaus**
    **Schoppe, Zimmermann, Stöckeler**
    **Zinkler, Schenk & Partner mbB**
    **Patentanwälte**
    **Radlkoferstrasse 2**
    **81373 München (DE)**

(54) **METHOD AND APPARATUS FOR PREDICTING A PICTURE USING AN IPM LIST GENERATED
    FROM ADDITIONAL INTRA PREDICTION AND/OR DERIVED MODES**

(57)    A method of processing one or more blocks of a picture selects an intra prediction mode (IPM) from an IPM list, and uses the selected IPM for predicting a block of the picture. The IPM list is generated by adding to one or more first IPMs one or more second IPMs and/or three or more third IPMs. The one or more first IPMs are from one or more first reconstructed blocks at respective corners of the block. The one or more second IPMs are from one or more second reconstructed blocks adjacent to the block. The third IPMs have highest amplitudes among IPMs derived from reconstructed neighboring samples.

Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.        — S100

Fig. 5

EP 4 761 240 A1

## Description

### Technical Field

The present disclosure generally relates to the field of encoding/decoding pictures, images or videos, and embodiments of the present disclosure concern improvements regarding a prediction. More specific embodiments of the present disclosure relate to the use of an intra prediction mode (IPM) list for predicting one or more blocks of a picture, with the IPM list created or generated using additional intra prediction modes, e.g., by generating/creating the IPM list using or based on IPMs from additional reconstructed blocks adjacent to a currently processed block and/or based on additional IPMs derived from reconstructed neighboring samples.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, like encoding and decoding of the picture, respective blocks of the picture are predicted and for the prediction an intra prediction mode (IPM) may be selected that is obtained from an IPM list, like a most probable mode (MPM) list. However, the IPM list may be created or generated using IPMs from reconstructed blocks and/or derived IPMs missing information for the currently processed block which may result in a sub-optimal block prediction.

Thus, there is a need to provide further improvements for processing/predicting a picture, an image or a video, e.g., when encoding and/or decoding of the picture, the image or the video.

### Summary

The present disclosure provides a method of processing one or more blocks of a picture, the method comprising:

selecting an intra prediction mode (IPM) from an IPM list, and using the selected IPM for predicting a block of the picture,
wherein the IPM list is generated by adding to one or more first IPMs one or more second IPMs and/or three or more third IPMs,
wherein the one or more first IPMs are from one or more first reconstructed blocks at respective corners of the block,
wherein the one or more second IPMs are from one or more second reconstructed blocks adjacent to the block, and
wherein the third IPMs have highest amplitudes among IPMs derived from reconstructed neighboring samples.

Optionally, the one or more second reconstructed blocks comprise one or more or all reconstructed blocks being adjacent a first side of the block, e.g., above the block, and/or one or more or all reconstructed blocks being adjacent a second side of the block, e.g., left of the block.

Optionally, the one or more second reconstructed blocks are located between the first reconstructed blocks.

Optionally, the IPM list is generated by adding to the first IPMs one or more of the following:

- the second IPMs from one or more or all second reconstructed blocks,
- the second IPMs from one or more or all second reconstructed blocks, which have an occurrence exceeding a predefined threshold,
- a mean IPM of the second IPMs from some or all second reconstructed blocks,
- a weighted mean IPM of the second IPMs from some or all second reconstructed blocks,
- a median IPM of the second IPMs from some or all second reconstructed blocks,
- a weighted median IPM of the second IPMs from some or all second reconstructed blocks,
- three or more third IPMs,

Optionally, the first reconstructed blocks comprise one or more or all of the following:

- a left reconstructed block (L),
- an above reconstructed block (A),
- an above-left reconstructed block (AL),
- an above-right reconstructed block (AR,) and

- a below-left reconstructed block (BL).

Optionally, relative to a top-left pixel of the block having a width and a height, an offset of the first reconstructed blocks is as follows:

- left (L): (-1, height-1),
- above (A): (width-1, -1),
- above-left (AL): (-1, -1),
- above-right (AR): (width, -1), and
- below-left (BL): (-1, height).

Optionally, the one or more second reconstructed blocks comprise one or more of the following:

- one or some or all reconstructed blocks between the above-left reconstructed block (AL) and the above reconstructed block (A),
- one or some or all reconstructed blocks between the above-left reconstructed block (AL) and the left reconstructed block (L).

Optionally, the one or more second reconstructed blocks comprise one or more of the following:

- a reconstructed block (AL2) adjacent to a first side of the block, e.g., above the block, and to the above-left reconstructed block (AL) and reconstructed blocks (AML, AMR) adjacent to a center of the first side of the block,
- a reconstructed block (AL3) adjacent to a second side of the block, e.g., left of the block, and to the above-left reconstructed block (AL) and reconstructed blocks (LMA, LMB) adjacent to a center of the second side of the block.

Optionally,

the one or more second reconstructed blocks comprise one or more of the following:

- a reconstructed block (AL2) adjacent to a first side of the block, e.g., above the block, and to the above-left reconstructed block (AL),
- a reconstructed block (AL3) adjacent to a second side of the block, e.g., left of the block, and to the above-left reconstructed block (AL), or

the one or more second reconstructed blocks comprise one or more of the following:

- reconstructed blocks (AML, AMR) adjacent to a center of a first side of the block, e.g., above the block,
- reconstructed blocks (LMA, LMB) adjacent to a center of a second side of the block, e.g., left of the block.

Optionally, up to five third IPMs are added to the first IPMs.
Optionally, only a subset of the up to five third IPMs are added to the first IPMs by adding a third IPM when the weight of the third IPM is larger than or equal to a certain threshold, the certain threshold is a predefined fraction of a maximum weight of the weights of the five third IPMs.
Optionally, the third IPMs are decoder side intra mode derivation (DIMD) modes.
Optionally, the IPM list is a most probable mode (MPM) list having a predefined number of entries, e.g., 22 entries.
The present disclosure provides a non-transitory computer-readable storage medium comprising instructions which, when executed by a computer, cause the computer to carry out the inventive method.
The present disclosure provides an apparatus of processing one or more blocks of a picture, the apparatus comprising:

a processing module, wherein the processing module is configured to select an intra prediction mode (IPM) from an IPM list, and use the selected IPM for predicting a block of the picture,
wherein the processing module is configured to generate the IPM list by adding to one or more first IPMs one or more second IPMs and/or three or more third IPMs,
wherein the one or more first IPMs are from one or more first reconstructed blocks at respective corners of the block,
wherein the one or more second IPMs are from one or more second reconstructed blocks adjacent to the block, and
wherein the third IPMs have highest amplitudes among IPMs derived from reconstructed neighboring samples.

The technical solutions provided according to embodiments of the present disclosure have the following beneficial effects.

In prior art approaches, IPMs for predicting a block of a picture are selected from an IPM list, like the MPM list (PMPM, SMPM, non-MPM), including IPMs only from reconstructed blocks which are at the corners of the currently processed block, e.g., reconstructed blocks A, L, AL, AR, BL. In addition two IPMs from DIMD and IPMs from non-adjacent reconstructed blocks may be included in the IPM list which includes, e.g., 22 entries. The conventional list does not include IPMs from additional adjacent reconstructed blocks so that information from such additional adjacent reconstructed blocks is not taken into account and the prediction performance may not be optimal. Also the two DIMD modes may not lead to an optimal prediction as selecting the DIMD modes with the highest amplitudes may not be the most efficient modes for the currently processed block and/or the amplitude differences between the two DIMD modes may be high so that one of the modes may not be efficient for processing/predicting the currently processed block.

Embodiments of the present disclosure provide various approaches for improving a prediction performance by adaptively utilizing a matrix-based prediction, like MPDP, and a conventional or non-matrix-based prediction intra prediction for a coding block. Embodiments address the drawbacks in conventional approaches by providing an approach, which, for predicting one or more blocks of a picture, selects an intra prediction mode (IPM) from an IPM list and uses the selected IPM for predicting a block of the picture, wherein, other than in conventional approaches, the IPM list is generated using the IPMs from the reconstructed blocks A, L, AL, AR, BL (the reconstructed blocks at the corners of the current block) and

- IPMs from additional adjacent reconstructed blocks, i.e., one or more reconstructed blocks directly abutting the top or left of the current block, and/or
- at least three DIMD modes.

The present disclosure is advantageous as the prediction performance is improved by appropriately making use additional information from additional reconstructed block adjacent to the currently processed block and/or by providing more efficient DIMD modes.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

Fig. 1    is a block diagram of a conventional video encoder,

Fig. 2    is a block diagram of a conventional video decoder,

Fig. 3    illustrates for a currently processed block of a picture neighboring blocks used in a derivation of a general MPM list,

Fig. 4    illustrates an example of a derivation of a general MPM list using the L, A, AL, AR and BL neighboring blocks of Fig. 3,

Fig. 5    illustrates a flow diagram of a method of processing one or more blocks of a picture in accordance with embodiments of the present disclosure,

Fig. 6    illustrates a flow diagram of an embodiment of a method of processing one or more blocks of a picture using IPMs from additional adjacent blocks in accordance with an embodiment of the present disclosure

Fig. 7    illustrates an example of adjacent blocks included and not included in a conventional MPM list construction process,

Fig. 8    illustrates another example of adjacent blocks included and not included in a conventional MPM list construction process,

Fig. 9    illustrates yet another example of adjacent blocks included and not included in a conventional MPM list construction process,

Fig. 10   illustrates a process or algorithm that adds the IPMs from all the adjacent blocks to the MPM list in accordance with embodiments of the present disclosure,

Fig. 11   illustrates an embodiment of the present disclosure adding IPMs only from a subset or some of the adjacent blocks,

Fig. 12   illustrates a process or algorithm in accordance with embodiments of the present disclosure that adds the IPMs from the new positions mor blocks illustrated in Fig. 11,

Fig. 13   illustrates a flow diagram of an embodiment of a method of processing one or more blocks of a picture using additional derived IPMs in accordance with a further embodiment of the present disclosure,

Fig. 14    illustrates a selection process for the DIMD modes to be included in the MPM in accordance with a further embodiment of the present disclosure,

Fig. 15    illustrates a flow diagram of a method for decoding an encoded data stream in accordance with embodiments of the present disclosure,

Fig. 16    illustrates a flow diagram of a method for encoding a picture into an encoded data stream in accordance with embodiments of the present disclosure,

Fig. 17    illustrates a block diagram of an apparatus of predicting one or more blocks of a picture in accordance with embodiments of the present disclosure,

Fig. 18    illustrates a block diagram of a decoder for decoding an encoded data stream in accordance with embodiments of the present disclosure,

Fig. 19    illustrates a block diagram of an encoder for encoding a picture into an encoded data stream in accordance with embodiments of the present disclosure,

Fig. 20    illustrates a data stream in accordance with embodiments of the present disclosure, and

Fig. 21    illustrates a block diagram illustrating an electronic device according to embodiments of the present disclosure.

## Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if', "when", "in case", "responsive to" may be used interchangeably.

*Standard Video Coder*

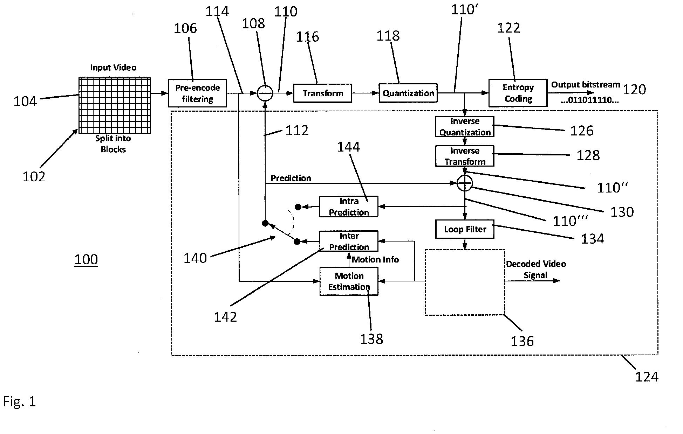

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

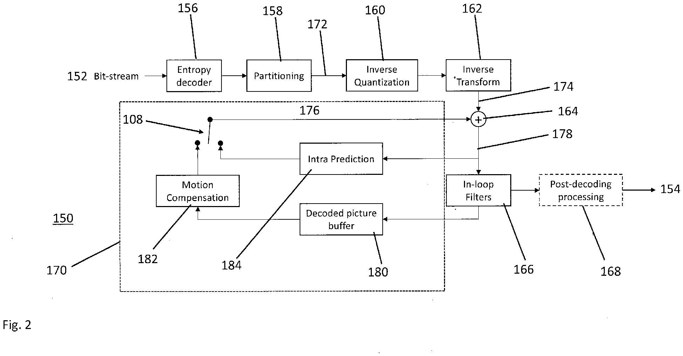

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

*Decoder side intra mode derivation (DIMD)*

When DIMD is applied, up to five intra modes are derived from the reconstructed neighbor samples, and those five predictors are combined with the nondirectional predictor (planar or block vector based predictor) with weights derived from the histogram of gradients as described in JVET-O0449. The decision between the nondirectional modes is taken according to the template cost. Specifically, the block vectors of all adjacent and non-adjacent merge candidates (coded in intra template matching prediction (IntraTMP) or intra clock copy (IBC)) are compared to a planar prediction on the reconstructed template. The template cost (sum of absolute transform difference, SATD) is used to select the best predictor among them.

The division operations in weight derivation are performed utilizing the same lookup table (LUT) based integerization scheme used by the Cross-Component Linear Model, CCLM. For example, the division operation in the orientation determination

$$Orient = G_y/G_x$$

is obtained, e.g., computed by the following LUT-based scheme:

$$x = \text{Floor}(\ \text{Log2}(\ Gx\ )\ )$$

$$normDiff = (\ (\ Gx << 4\ ) >> x\ )\ \&\ 15$$

$$x += (\ 3 + (\ normDiff\ !=\ 0\ )\ ?\ 1 : 0\ )$$

$$Orient = (Gy * (\ DivSigTable[\ normDiff\ ]\ |\ 8\ ) + (\ 1 << (\ x\text{-}1\ )\ ))\ >> x$$

where

$$DivSigTable[16] = \{\ 0, 7, 6, 5, 5, 4, 4, 3, 3, 2, 2, 1, 1, 1, 1, 0\ \}.$$

For a block of size $W \times H$, the weight for each of the five derived modes is modified if one of the above or left histogram magnitudes is twice as large as the other one. In this case, the weights are location dependent and computed as follows:

If the above histogram is twice the left, then:

$$w_i(x,y) = wDimd_i + \Delta_i - 2\Delta_i \frac{y}{(H-1)}.$$

If the left histogram is twice the above, then:

$$w_i(x,y) = wDimd_i + \Delta_i - 2\Delta_i \frac{x}{(W-1)},$$

where $wDimd_i$ is the unmodified uniform weight of the DIMD selected as in JVET-O0449, $\Delta_i$ is pre-defined and set to 10.

The derived intra modes are included in a primary list of intra most probable modes (MPM), so the DIMD process is performed before the MPM list is constructed. The primary derived intra mode of a DIMD block is stored with a block and is used for MPM list construction of the neighboring blocks.

Finally, note that the region of neighboring reconstructed samples used for computing the histogram of gradients is modified compared to the JVET-O0449 method, depending on reconstructed samples availability. The region of decoded reference samples of a current WxH luma CB is extended towards the above-right side if available, up to W additional columns. It is extended towards the bottom-left side if available, up to H additional rows.

*Angular Intra Prediction Mode (IPM) in VVC and ECM*

There exists a set of 67 Intra Prediction Modes (IPMs) in both VVC and ECM, including two non-angular modes of DC and Planar (index 0 and 1), along with 65 angular modes (indexed as 2,3,...66). The initial set of 65 angular IPMs may be extended to so-called wide-angle modes (indexed as -14,-13,...,-1 and 67,68,...,80), depending on block characteristics such as width/height ratio. The angular intra prediction modes are signaled through the most probable mode (MPM) and non-MPM lists.

*Most Probable Mode (MPM) and non-MPM lists*

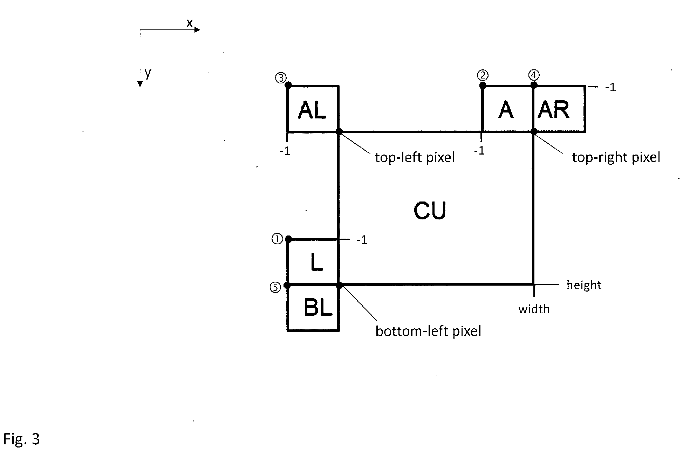

An MPM list may include a primary MPM (PMPM) list comprising 6 entries and a secondary MPM (SMPM) list including 16 entries. A general MPM list with 22 entries is constructed first, and then the first 6 entries in this general MPM list are included into the PMPM list, and the rest of entries of the general MPM list form the SMPM list. The first entry in the general MPM list is the Planar mode. The remaining entries are composed of the intra modes of the left (L), above (A), below-left (BL), above-right (AR), and above-left (AL) neighboring blocks of a currently processed or predicted block and DIMD modes which are sorted in ascending order of SAD cost. Fig. 3 illustrates for a currently processed block CU the neighboring blocks L, A, BL, AR, AL used in the derivation of the general MPM list. Up to 5 modes with the smallest SAD cost are added. The SAD cost is computed between the prediction and the reconstruction samples of the template. The sorted directional modes with added offset are added into the general MPM list, and then the default modes, until the general MPM list with 22 entries is constructed.

In this disclosure, the intra modes of the left (L), above (A), below-left (BL), above-right (AR), and above-left (AL) neighboring blocks are also referred to as the first intra prediction modes (IPMs). Further, the above terms left (L), above (A), above-left (AL), above-right (AR) and below-left (BL) are defined as position based on the current block position. The position of the current block is depicted in x, y coordinates with respect to the position of the first pixel, the top-left pixel of the current block, from the current block within the picture. Based on that x, y position of the top-left pixel, offsets are computed to obtain the positions ① to ⑤ of the reconstructed blocks L, A, AL, AR and BL. As may be seen, the reconstructed blocks L, A, AL, AR and BL are all adjacent or abutting respective corners of the currently processed block, more specifically, corners corresponding to the top-left pixel position, the top-right pixel position and the bottom-left pixel position. Relative to the x, y position of the top-left pixel, the offsets of the positions ① to ⑤ are as follows:

①: (-1, height - 1),
②: (width - 1, -1),
③: (-1, -1),
④ (width, -1),
⑤: (-1, height).

The blocks within these pixel positions are considered as L, A, AL, AR and BL neighboring or adjacent blocks.

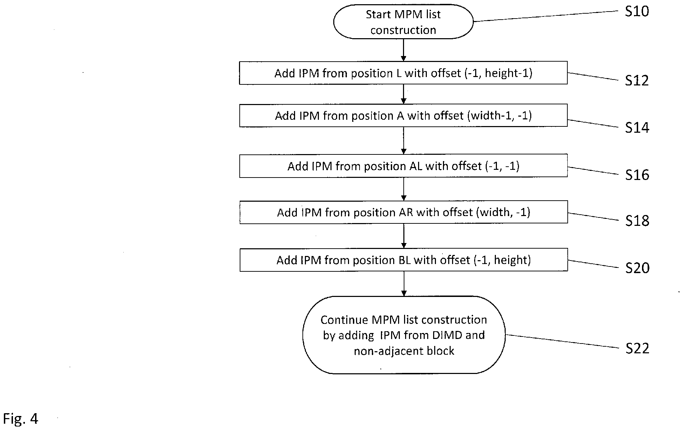

Fig. 4 illustrates an example of the derivation of a general MPM list using the L, A, AL, AR and BL neighboring blocks of Fig. 3. The MPM list construction starts at S10. At S12, the IPM from position ① (L) having the offset (-1, height-1) from the top-left pixel of the current block CU is added.. At S14, the IPM from position ② (A) having the offset (width-1, -1) from the top-left pixel of the current block CU is added. At S16, the IPM from the position ③ AL having the offset (-1, -1) from the top-left pixel of the current block CU is added. At S18, the IPM from position ④ (AR) having the offset (width, -1) from the top-left pixel of the current block CU is added. At S20, the IPM from position ⑤ (BL) having the offset (-1, height) from the top-left pixel of the current block CU is added. Then, at S22, the MPM list construction continues by adding IPMs obtained by DIMD and IPMs from non-adjacent block(s). Based on the general MPM list, a non-MPM list is constructed with the remaining IPMs.

As described above, conventionally, the MPM list, e.g., in ECM, is constructed using neighboring or adjacent reconstructed blocks and the two derived intra modes from DIMD with the highest amplitudes. However, this MPM list construction may overlook information from excluded neighboring or adjacent reconstructed blocks and/or information from excluded DIMD modes.

In the case of excludes neighboring blocks, the mode integrated into the MPM list may be coming from either adjacent or non-adjacent reconstructed blocks. The adjacent blocks are derived only from the specific positions described with reference to Fig. 3, i.e., the left, above, above-left, above-right, and below-left neighboring blocks. These positions point to pixels related to specific regions which may overlook information from other adjacent blocks that are not included in the list.

In the case of DIMD, only the two modes with the highest amplitudes are added to the MPM list. By only adding the two modes with the highest amplitudes, the current block may be missing some efficient modes. Another disadvantage is that the two modes with the highest amplitudes may have large differences in terms of amplitudes which might add a mode that is not efficient for the current block.

Embodiments of the present disclosure addresses the drawbacks in conventional approaches by providing an IPM list, like an MPM list, which is generated/created using

-    IPMs from additional neighboring or adjacent reconstructed blocks, e.g., one or more neighboring or adjacent reconstructed blocks in addition to the left, above, above-left, above-right, and below-left neighboring block, and/or
-    additional DIMD modes.

Thus, the present disclosure provides various approaches for improving a prediction performance by taking into account information from additional reconstructed blocks, thereby improving the prediction performance.

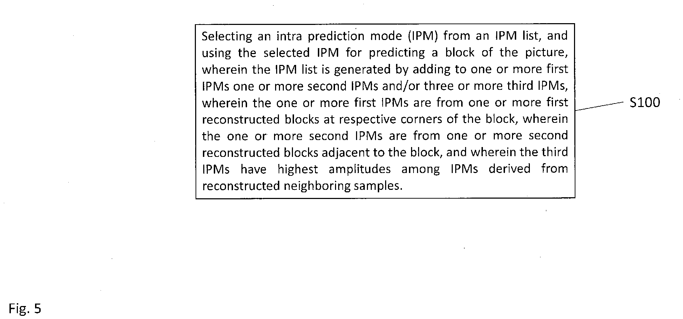

Fig. 5 illustrates a flow diagram of an embodiment of a method of processing one or more blocks of a picture. The method includes:,

S100: Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

Thus, according to embodiments, the conventional MPM list creation process is modified by adding new intra prediction modes (IPMs) based on adjacent blocks and/or DIMD.

Embodiments are described in the following with reference first reconstructed blocks which include one or more of all of the reconstructed blocks L, A, AL, AR and BL described above with reference to Fig. 3. L, A, AL, AR and BL result from a certain coding order of the picture, e.g., in accordance with the used codec. When coding a current block, the intra prediction relies on already reconstructed blocks which, according to the certain coding order, are above and left of the current block, with no reconstructed blocks below or right of the current block, e.g., there is no below (B) reconstructed block (offset from top-left pixel: 0, height), no right (R) reconstructed block (offset from top-left pixel: width, 0), and no below-right (BR) reconstructed block (offset from top-left pixel: width, height).

It is noted that the present disclosure is not limited to the above coding order. Other embodiments may apply a different coding order, which results in one or more different reconstructed blocks, e.g., reconstructed blocks below or right of the current block, like B, R and BR, with no reconstructed blocks above or left of the current block. Also when applying such a coding order the inventive approach described herein may be applied.

*IPMs from additional adjacent blocks*

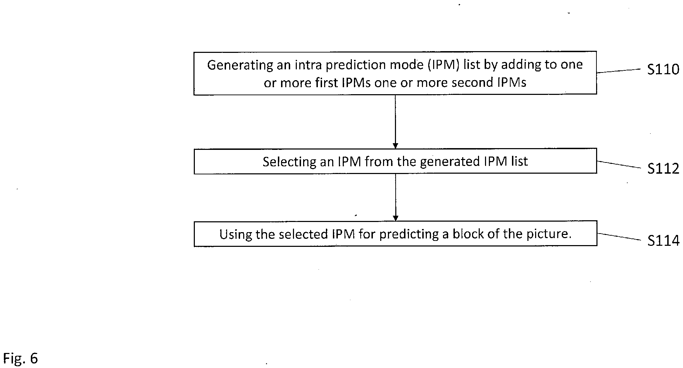

In accordance with embodiments, the IPMs used by one or more or all adjacent blocks that are not currently included are added to the MPM list construction process. Fig. 6 illustrates a flow diagram of an embodiment of a method of processing one or more blocks of a picture using IPMs from additional adjacent blocks in accordance with an embodiment of the present disclosure. The method includes:

S110: Generating an intra prediction mode (IPM) list, like the MPM list, by adding to one or more first IPMs one or more second IPMs. The one or more first IPMs are from one or more first reconstructed blocks at respective corners of the block, and the one or more second IPMs are from one or more second reconstructed blocks adjacent to the block.
S112: Selecting an IPM from an IPM list.
S114: Using the selected IPM for predicting a block of the picture.

In accordance with embodiments, the IPMs (second IPMs) coming from all the adjacent blocks are added to the MPM list construction.

In accordance with embodiments, only the IPMs (second IPMs) from AL2, AL3, LMA, AML, LMB, AMR adjacent blocks are added to the MPM list construction.

In accordance with embodiments, only the IPMs (second IPMs) from AL2, AL3 adjacent blocks are added to the MPM list construction.

In accordance with embodiments, only the IPMs (second IPMs) from the LMA, AML, LMB, AMR adjacent blocks are added to the MPM list construction.

In accordance with embodiments, only the mean IPM from all the adjacent blocks are added to the MPM list construction.

In accordance with embodiments, only the weighted mean IPM from all the adjacent blocks are added to the MPM list construction.

In accordance with embodiments, only the median IPM from all the adjacent blocks are added to the MPM list construction.

In accordance with embodiments, only the weighted median IPM from all the adjacent blocks are added to the MPM list construction.

In accordance with embodiments, only the IPMs with the highest occurrences in the adjacent blocks are added to the MPM list construction.

Further embodiments of the present disclosure are now described in more detail.

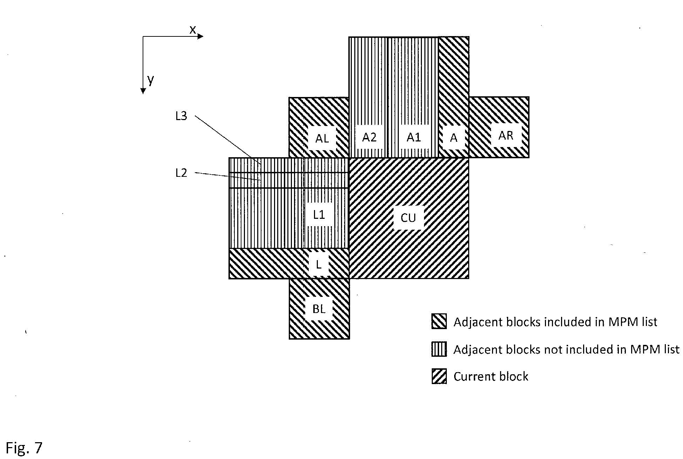

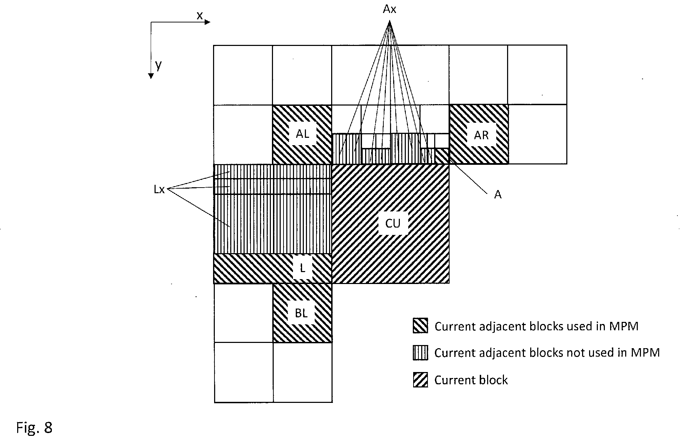

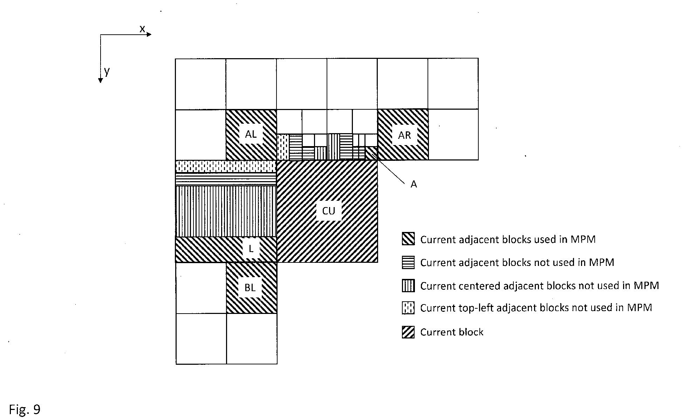

In accordance with embodiments, additional adjacent blocks, which point to specific regions or reconstructed adjacent blocks, are added to the MPM. In accordance with embodiments, IPMs from all adjacent blocks may be added to the MPM list. Fig. 7 illustrates adjacent blocks included and not included in a conventional MPM list construction process. As is shown in Fig. 7, when there are three adjacent blocks above the current block CU, the conventional MPM list construction process uses only the IPM (first IPM) from the above (A) neighbor, ignoring IPMs (second IPMs) from the middle (A1) neighbor and the left neighbor (A2) from above. Likewise, when there are four adjacent blocks left of the current block CU, the conventional MPM list construction process uses only the IPM (first IPM) from the left (L) neighbor, ignoring IPMs (second IPMs) from the other neighbor(s) (L1, L2, L3) on the left. Fig. 8 illustrates another example of adjacent blocks included (A, L, AL, AR, BL) and not included (Ax, Lx) in a conventional MPM list construction process. Fig. 9 illustrates yet another example of adjacent blocks included (A, L, AL, AR, BL) and not included in a conventional MPM list construction process. In accordance with embodiments, also IPMs from one or more or all of the additional neighbors (A1, A2, L1, l2, L3 or Ax, Lx or Current adjacent blocks not used in MPM, Current centered adjacent blocks not used in MPM, Current top-left adjacent blocks not used in MPM) from above and/or from the left are included into the MPM list construction process.

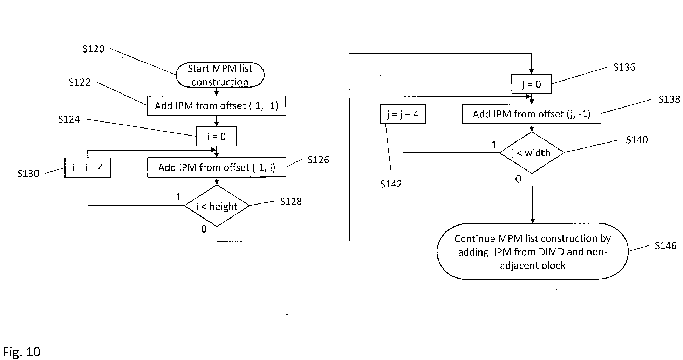

Fig. 10 illustrates a process or algorithm that adds the IPMs from all the adjacent blocks to the MPM list in accordance with embodiments of the present disclosure. Based on the current block position (x, y), a position offset (a, b), with a being the offset along the horizontal direction or x axis and b being the offset along the vertical direction or y axis (see Fig. 3, Fig. 7, Fig. 8 or Fig. 9). The offset is defined to specify a pixel position and is used to fetch IPM information from the corresponding adjacent block. The IPM of each adjacent block is then added to the MPM list. At S120 the MPM list construction process is started. The process starts with adding S122 the IPM (first IPM) from the position AL having the offset (-1, -1) from the top-left pixel of the current block CU. The process then proceeds adding the IPMs (first and second IPMs) from the blocks on the left of the CU by setting S124 the counter i = 0. Then, the IPM (a second IPM) from the position (directly below AL) having the offset (-1, i) from the top-left pixel of the current block CU is added S126. At S128 it is determined whether the height of the current block CU has been reached, i < height. If not ("1"), the counter i is incremented S130 by the height of the reconstructed left blocks, e.g., by i = i + 4 when assuming the height of the reconstructed left blocks to be 4 pixel, and the remaining IPMs (first and second IPMs) from the blocks left of the currently processed block are added. If the height has been reached ("0"), the IPMs (first and second IPMs) from the blocks above the currently processed block are added. At S136 the counter j is set to j = 0. Then, the IPM (second IPM) from the position (directly left of AL) having the offset (j, - 1) from the top-left pixel of the current block CU is added S138. At S140 it is determined whether the width of the current block CU has been reached, j < width. If not ("1"), the counter j is incremented S142 by the width of the reconstructed above blocks, e.g., by j = j + 4 when assuming the width of the reconstructed left blocks to be 4 pixel, and the remaining IPMs (first and second IPMs) from the blocks above the currently processed block are added. If the width has been reached ("0"), the IPMs (second IPMs) from all adjacent blocks have been added, and the process continues S146 with the MPM list construction by adding IPM(s) from DIMD and non-adjacent block(s).

It is noted that a new IPM is added to the MPM list only if that IPM has not already been included.

The present disclosure is not limited to adding IPMs from all adjacent blocks as illustrated above. Rather, in accordance with other embodiments an IPM·from only one additional block or IPMs from only some of the additional blocks may be added.

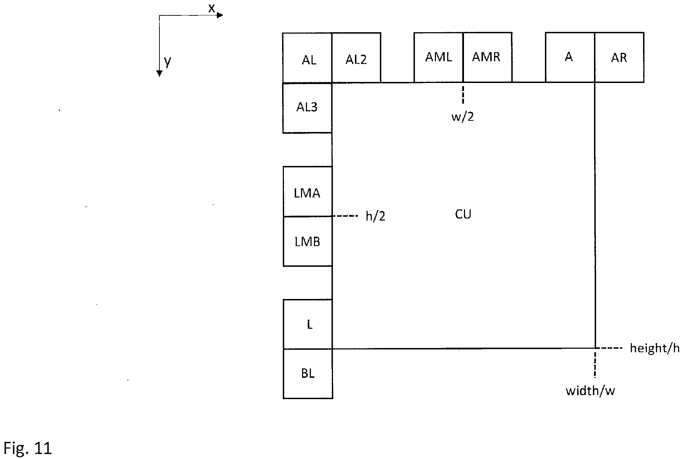

Fig. 11 illustrates an embodiment adding IPMs only from a subset or some of the adjacent blocks. More specifically, Fig. 11 illustrates the additional or new positions with their respective offsets from with IPMs (second IPMs) are added to the MPM list. Also the positions L, A, AL, AR, BL already conventionally included in the MPM list are shown (providing the first IPMs). The new or additional specific positions are AL2 (Above Left 2), AL3 (Above Left 3), LMA (Left Middle Above), AML (Above Middle Left), LMB (Left Middle Below) and AMR (Above Middle Right) which correspond to an offset based on the current block (x, y) of (0, -1), (-1, 0), (-1, height/2 - 1), (width/2 - 1, -1), (-1, height/2) and (width/2, -1), respectively.

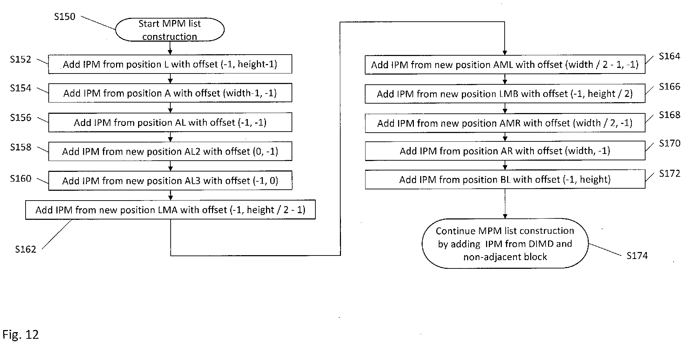

Fig. 12 illustrates a process or algorithm in accordance with embodiments of the present disclosure that adds the IPMs from the new positions AL2, AL3, LMA, AML, LMB, AMR to the MPM list. The MPM list construction process starts at S150. The IPM from the position L (first IPM) having the offset (-1, height-1) from the top-left pixel of the current block CU is added S152. The IPM from the position A (first IPM) having the offset (width-1, -1) from the top-left pixel of the current block CU is added S154. The IPM from the position AL (first IPM) having the offset (-1, -1) from the top-left pixel of the current block CU is added S156. The IPM from the new position AL2 (second IPM) having the offset (0, -1) from the top-left pixel of the current block CU is added S158. The IPM from the new position AL3 having the offset (-1, 0) from the top-left pixel of the current block CU is added S160. The IPM (second IPM) from the new position LMA having the offset (-1, height/2 - 1) from the top-left pixel of the current block CU is added S162. The IPM from the new position AML having the offset (width/2 - 1, -1) from the top-left pixel of the current block CU is added S164. The IPM (second IPM) from the new position LMB having the offset (-1, height/2) from the top-left pixel of the current block CU is added S166. The IPM (second IPM) from the new position AMR having the offset (width/2, -1) from the top-left pixel of the current block CU is added S168. The IPM (first IPM) from the position AR having the offset (width, -1) from the top-left pixel of the current block CU is added S170. The IPM (first IPM) from the position BL having the offset (-1, height) from the top-left pixel of the current block CU is added S172. The MPM list construction continues S174 by adding IPM(s) from DIMD and non-adjacent block(s).

In accordance with further embodiments, a mean and/or median of the IPMs from some or all adjacent blocks may be exploited. The mean and median values may be computed or determined as usual or may be weighted in relation to a size of the adjacent blocks. In accordance with an embodiment, only the mean and/or median is added to the MPM list instead of adding the IPM of some or all adjacent blocks. In accordance with another embodiment, the mean and/or median is added in addition or on top of the IPMs from the adjacent blocks. In accordance with embodiments, when the mean and/or median is computed or determined, the planar and DC modes may be excluded from the MPM list.

In accordance with yet further embodiments, a histogram of occurrences may be constructed to select optimal IPMs. Based on the IPM of all adjacent blocks, a histogram of occurrences which represents the distribution of the IPMs is constructed either with a weight of 1 for each IPM or with a weight based on the size of the adjacent blocks. Then, the IPMs with the highest occurrences are selected and added to the MPM list.

*Additional derived IPMs*

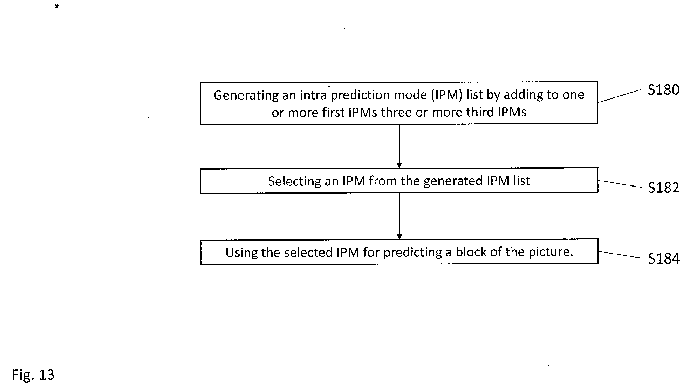

In accordance with embodiments, one or more or all of five derived intra modes with the highest amplitudes are included to the MPM list of the current block. Fig. 13 illustrates a flow diagram of an embodiment of a method of processing one or more blocks of a picture using additional derived IPMs in accordance with a further embodiment of the present disclosure. The method includes:

S180: Generating an intra prediction mode (IPM) list, like the MPM list, by adding to one or more first IPMs three or more third IPMs. The one or more first IPMs are from one or more first reconstructed blocks at respective corners of the block, and the three or more third IPMs are IPMs derived from reconstructed neighboring samples, which have the highest amplitudes among all the derived IPMs.
S182: Selecting an IPM from an IPM list.
S184: Using the selected IPM for predicting a block of the picture.

Thus, other than in conventional approaches adding only the two DIMD modes with the highest amplitudes to the MPM list, in accordance with embodiments of the present disclosure up to five derived intra modes from DIMD with the highest amplitudes may be added into the MPM list.
In accordance with embodiments, the five derived intra modes (third IPMs) from DIMD with the highest amplitudes, are added to the MPM list construction.
In accordance with embodiments, the five derived intra modes (third IPMs) with the highest amplitudes, are added to the MPM list construction if the DIMD weight is superior or equal to the maximal DIMD weight multiplied by a threshold.
Further embodiments of the present disclosure are now described in more detail.
In accordance with embodiment, even though adding up to five DIMD modes is possible, some of these modes may not be optimal compared to others, e.g. when one of the DIMD modes represents an unsignificant proportion of a block template, so that it not to be involved in the MPM list construction. An unsignificant proportion can be deduced by the weights of each mode which are based on their amplitudes. In accordance with embodiments, only a subset of the five derived intra modes with the highest amplitudes is added, e.g., based on a comparison between the weight of a specific mode and a threshold multiplied by a maximal weight, i.e., the highest value among the five DIMD modes weights.

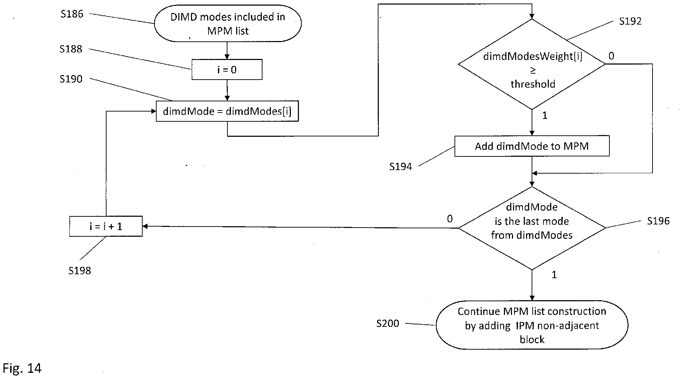

Fig. 14 illustrates an embodiment of the selection process for the DIMD modes (third IPMs) to be included in the MPM list. In Fig. 14, dimdModes represents a list including the five derived intra modes with the highest amplitudes, dimdModesWeight is a list of weights of DIMD modes in the dimdModes list and the threshold may be calculated of determined by thr (a value between 0 and 1) multiplied by maxWeight which is the largest weight value in the dimdModes-Weight list. The process of including DIMD modes (third IPMs) in the MPM list stars at S186. At S188 the counter i is set to i = 0, and the current DIMD mode (dimdMode = dimdModes[i]) is obtained at S190. At S192 it is determined whether the current DIMD has associated a weight greater than or equal to the threshold thr (mode dimdModesWeight[i] ≥ threshold). If yes ("1") the DIMD mode is added S194 to the MPM list (Add dimdMode to MPM) and the process proceeds to S196. If no ("0") the process proceeds directly to S196. At S196 it is determined whether the current DIMD mode is the last one in the list (dimdMode is the last mode from dimdModes?). If no ("0"), the counter I is incremented S198 (i = i + 1) and the next DIMD mode is obtained (S190) from the list and checked. Otherwise, if yes ("1"), the MPM list construction continues S200 by adding IPM(s) from non-adjacent block(s).
Thus, for each DIMD mode, if its weight is larger or equal to a certain threshold, the DIMD mode (third IPMs) is added to the MPM list construction. Otherwise, that mode is not added. In accordance with embodiments, the threshold thr may be equal to 0.5, i.e., if the weight of a mode is superior or equal to half of the maximal weight, then the mode is added to the MPM list.

*IPMs from additional adjacent blocks and Additional derived IPMs*

It is noted that all embodiments described herein may be combined.

*Decoding Method*

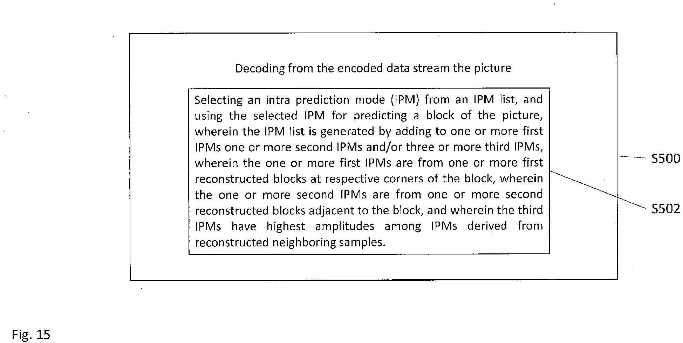

Fig. 15 illustrates a flow diagram of a method for decoding an encoded data stream, the encoded data stream including data representing a picture. The method includes the following:

S500: Decoding from the encoded data stream the picture.

Decoding the picture comprises selecting S502 an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

*Encoding Method*

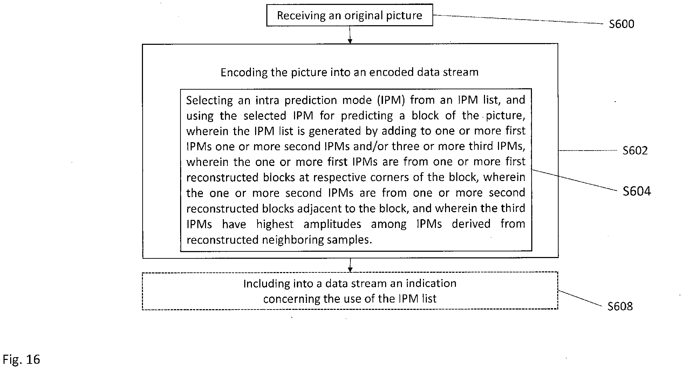

Fig. 16 illustrates a flow diagram of a method for encoding a picture into an encoded data stream. The encoded data stream includes data representing the picture and the method includes the following:

S600: Receiving an original picture.
S602: Encoding the picture into the encoded data stream.

Encoding the picture comprises selecting S604 an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

Optionally, the method comprises including S608 into the data stream or bitstream an indication concerning the use of the IPM list provided in accordance with embodiments of the present disclosure, e.g., an indication, e.g., a flag or an index, indicating that for a prediction of a block of the picture an IPM list is used which is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

*Further embodiments*

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

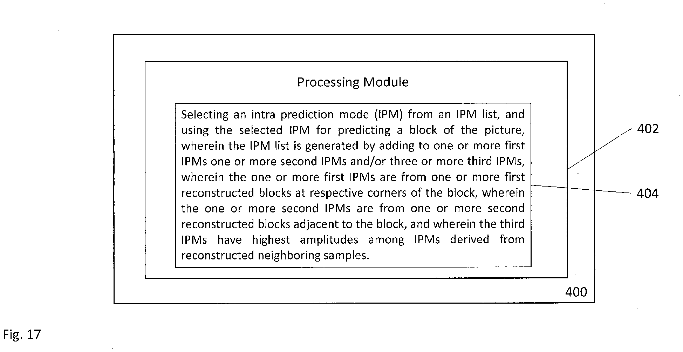

Fig. 17 illustrates a block diagram of an apparatus 400 of predicting one or more blocks of a picture in accordance with embodiments of the present disclosure. The apparatus 400 includes a processing module 402. The processing module is configured to select 404 an intra prediction mode (IPM) from an IPM list, and use the selected IPM for predicting a block of the picture. The processing module is configured to generate the IPM list by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

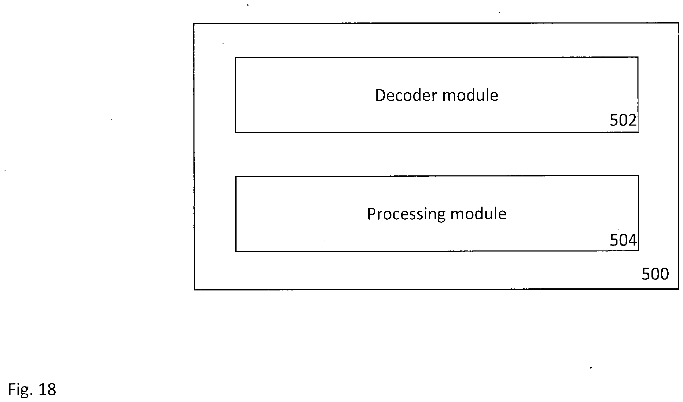

Fig. 18 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.
504: A processing module, e.g., a prediction module 170 as depicted in Fig. 2. The prediction module 502 is configured to operate in accordance with embodiments of the present disclosure. For example, the prediction module 502 includes an apparatus as described with reference to Fig. 17.

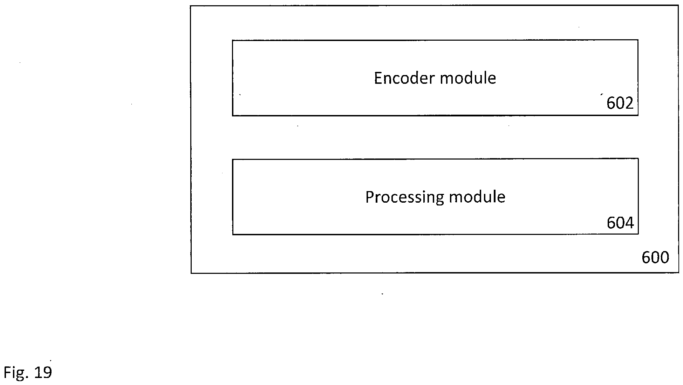

Fig. 19 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.

604: A prediction module, e.g., a prediction module 124 as depicted in Fig. 1. The prediction module 602 is configured to operate in accordance with embodiments of the present disclosure. For example, the prediction module 502 includes an apparatus as described with reference to Fig. 17.

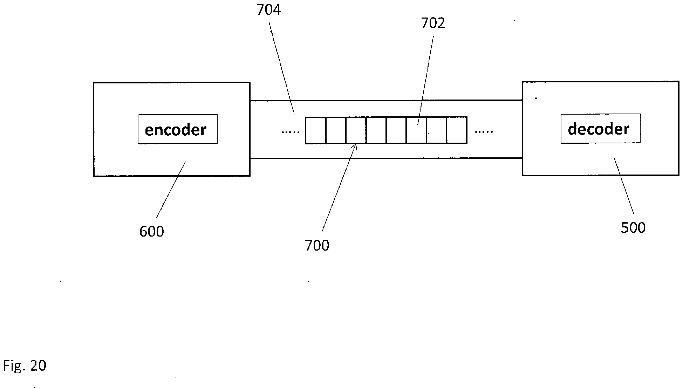

Fig. 20 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes a signaling 702, which is encoded into the data stream by the encoder 600. The signaling may be an indication concerning the use of the IPM list provided in accordance with embodiments of the present disclosure, e.g., an indication, like a flag or an index, indicating that for a prediction of a block of the picture an IPM list is used which is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

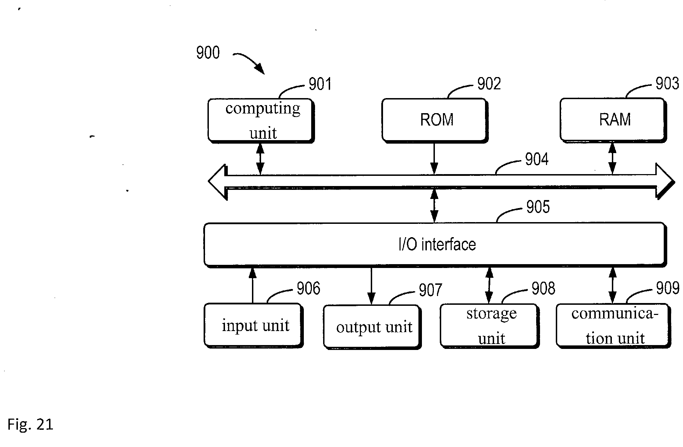

Fig. 21 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising:

> selecting an intra prediction mode (IPM) from an IPM list, and using the selected IPM for predicting a block of the picture,
> wherein the IPM list is generated by adding to one or more first IPMs one or more second IPMs and/or three or more third IPMs,
> wherein the one or more first IPMs are from one or more first reconstructed blocks at respective corners of the block,
> wherein the one or more second IPMs are from one or more second reconstructed blocks adjacent to the block, and
> wherein the third IPMs have highest amplitudes among IPMs derived from reconstructed neighboring samples.

A 2nd embodiment provides the method of the 1st embodiment, wherein the one second reconstructed blocks comprise one or more or all reconstructed blocks being adjacent a first side of the block, e.g., above the block, and/or one or more or all reconstructed blocks being adjacent a second side of the block, e.g., left of the block.

A 3rd embodiment provides the method of the 2nd embodiment, wherein the one or more second reconstructed blocks are located between the first reconstructed blocks.

A 4th embodiment provides the method of any one of the preceding embodiments, wherein the IPM list is generated by adding to the first IPMs one or more of the following:

the second IPMs from one or more or all second reconstructed blocks,
- the second IPMs from one or more or all second reconstructed blocks, which have an occurrence exceeding a predefined threshold,
- a mean IPM of the second IPMs from some or all second reconstructed blocks,
- a weighted mean IPM of the second IPMs from some or all second reconstructed blocks,
- a median IPM of the second IPMs from some or all second reconstructed blocks,
- a weighted median IPM of the second IPMs from some or all second reconstructed blocks,
- three or more third IPMs.

A 5th embodiment provides the method of any one of the preceding embodiments, wherein the first reconstructed blocks comprise one or more or all of the following:

- a left reconstructed block (L),
- an above reconstructed block (A),
- an above-left reconstructed block (AL),
- an above-right reconstructed block (AR,) and
- a below-left reconstructed block (BL).

A 6th embodiment provides the method of the 5th embodiment, wherein, relative to a top-left pixel of the block having a width and a height, an offset of the first reconstructed blocks is as follows:

- left (L):            (-1, height-1),
- above (A):            (width-1, -1),
- above-left (AL):            (-1, -1),
- above-right (AR):            (width, -1), and
- below-left (BL):            (-1, height).

A 7th embodiment provides the method of the 5th or 6th embodiment, wherein the one or more second reconstructed blocks comprise one or more of the following:

- one or some or all reconstructed blocks between the above-left reconstructed block (AL) and the above reconstructed block (A),
- one or some or all reconstructed blocks between the above-left reconstructed block (AL) and the left reconstructed block (L).

An 8th embodiment provides the method of any one of the 5th to 7th embodiment, wherein the one or more second reconstructed blocks comprise one or more of the following:

- a reconstructed block (AL2) adjacent to a first side of the block, e.g., above the block, and to the above-left reconstructed block (AL) and reconstructed blocks (AML, AMR) adjacent to a center of the first side of the block,
- a reconstructed block (AL3) adjacent to a second side of the block, e.g., left of the block, and to the above-left reconstructed block (AL) and reconstructed blocks (LMA, LMB) adjacent to a center of the second side of the block.

A 9th embodiment provides the method any one of the 5th to 7th embodiment, wherein the one or more second reconstructed blocks comprise one or more of the following:

- a reconstructed block (AL2) adjacent to a first side of the block, e.g., above the block, and to the above-left reconstructed block (AL),
- a reconstructed block (AL3) adjacent to a second side of the block, e.g., left of the block, and to the above-left reconstructed block (AL).

A 10th embodiment provides the method of any one of the 5th to 7th embodiment, wherein the one or more second reconstructed blocks comprise one or more of the following:

- reconstructed blocks (AML, AMR) adjacent to a center of a first side of the block, e.g., above the block,

- reconstructed blocks (LMA, LMB) adjacent to a center of a second side of the block, e.g., left of the block.

An 11th embodiment provides the method of any one of the preceding embodiments, wherein the first and second IPMs include non-angular and angular IPMs.

A 12th embodiment provides the method of the 11th embodiment, wherein the angular IPMs include wide-angle IPMs.

A 13th embodiment provides the method of any one of the preceding embodiments, wherein up to five third IPMs are added to the first IPMs.

A 14th embodiment provides the method of the 13th embodiment, wherein only a subset of the up to five third IPMs are added to the first IPMs.

A 15th embodiment provides the method of the 13th or 14th embodiment, wherein a third IPM is added dependent on a weight of the third IPM.

A 16th embodiment provides the method of the 14th embodiment, wherein the third IPM is added when the weight of the third IPM is larger than or equal to a certain threshold.

A 17th embodiment provides the method of the 16th embodiment, wherein the certain threshold is a predefined fraction of a maximum weight of the weights of the five third IPMs.

An 18th embodiment provides the method of any one of the preceding embodiments, wherein the third IPMs are decoder side intra mode derivation (DIMD) modes.

A 19th embodiment provides the method of any one of the preceding embodiments, wherein fourth IPMs from at least one non-adjacent reconstructed block of the block are added to the first IPMs.

A 20th embodiment provides the method of any one of the preceding embodiments, wherein IPMs are added to the first IPMs until the IPM list includes a predefined number of entries, e.g., 22 entries.

A 21st embodiment provides the method of any one of the preceding embodiments, wherein the IPM list is a most probable mode (MPM) list.

A 22nd embodiment provides the method of the 21st embodiment, wherein the MPM list comprises:

- a primary most probable mode (PMPM) list,
- a secondary most probable mode (SMPM) list.

A 23rd embodiment provides a method for decoding an encoded data stream, the encoded data stream including data representing a picture, and the method comprising:

decoding from the encoded data stream the picture,
wherein decoding the picture comprises processing one or more blocks of the picture according to the method of any one of the preceding embodiments

A 24th embodiment provides a method for encoding a picture into an encoded data stream, the encoded data stream including data representing the picture, and the method comprising:

receiving a picture, and
encoding the picture into the encoded data stream,
wherein encoding the picture comprises processing one or more blocks of the picture according to the method of any one of the 1st to 22nd embodiments.

A 25th embodiment provides a non-transitory computer-readable storage medium comprising instructions which, when executed by a computer, cause the computer to carry out the method of any one of the preceding embodiments.

A 26th embodiment provides an apparatus of processing one or more blocks of a picture, the apparatus comprising: a processing module, wherein the processing module is configured to select an intra prediction mode (IPM) from an IPM list, and use the selected IPM for predicting a block of the picture,

wherein the processing module is configured to generate the IPM list by adding to one or more first IPMs one or more second IPMs and/or three or more third IPMs,
wherein the one or more first IPMs are from one or more first reconstructed blocks at respective corners of the block,
wherein the one or more second IPMs are from one or more second reconstructed blocks adjacent to the block, and
wherein the third IPMs have highest amplitudes among IPMs derived from reconstructed neighboring samples.

A 27th embodiment provides an apparatus for decoding an encoded data stream, the encoded data stream including data representing a picture, the apparatus comprising:

a decoder module configured to decode from the encoded data stream the picture, and
a prediction module, the prediction module including an apparatus according to the 26th embodiment.

A 28th embodiment provides an apparatus for encoding a picture into an encoded data stream, the encoded data stream including data representing the picture, the apparatus comprising:

an encoder module configured to receive a picture and to encode the picture into the encoded data stream, and
a prediction module, the prediction module including an apparatus according to the 26th embodiment.

A 29th embodiment provides a data stream having encoded thereinto a picture, wherein the data stream comprises: an indication, e.g., a flag or an index, the indication indicating that for a prediction of a block of the picture an IPM list is used which is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

## References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http: //aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1.    A method of processing one or more blocks of a picture, the method comprising:

selecting an intra prediction mode (IPM) from an IPM list, and using the selected IPM for predicting a block of the picture,
wherein the IPM list is generated by adding to one or more first IPMs one or more second IPMs and/or three or more third IPMs,
wherein the one or more first IPMs are from one or more first reconstructed blocks at respective corners of the block,
wherein the one or more second IPMs are from one or more second reconstructed blocks adjacent to the block, and
wherein the third IPMs have highest amplitudes among IPMs derived from reconstructed neighboring samples.

2.    The method of claim 1, wherein the one or more second reconstructed blocks comprise one or more or all reconstructed blocks being adjacent a first side of the block, e.g., above the block, and/or one or more or all reconstructed blocks being adjacent a second side of the block, e.g., left of the block.

3.    The method of claim 2, wherein the one or more second reconstructed blocks are located between the first reconstructed blocks.

4.    The method of any one of the preceding claims, wherein the IPM list is generated by adding to the first IPMs one or more of the following:

- the second IPMs from one or more or all second reconstructed blocks,
- the second IPMs from one or more or all second reconstructed blocks, which have an occurrence exceeding a predefined threshold,
- a mean IPM of the second IPMs from some or all second reconstructed blocks,
- a weighted mean IPM of the second IPMs from some or all second reconstructed blocks,
- a median IPM of the second IPMs from some or all second reconstructed blocks,
- a weighted median IPM of the second IPMs from some or all second reconstructed blocks,
- three or more third IPMs.

5. The method of any one of the preceding claims, wherein the first reconstructed blocks comprise one or more or all of the following:

- a left reconstructed block (L),
- an above reconstructed block (A),
- an above-left reconstructed block (AL),
- an above-right reconstructed block (AR,) and
- a below-left reconstructed block (BL).

6. The method of claim, wherein, relative to a top-left pixel of the block having a width and a height, an offset of the first reconstructed blocks is as follows:

- left (L):          (-1, height-1),
- above (A):         (width-1, -1),
- above-left (AL):   (-1, -1),
- above-right (AR):  (width, -1), and
- below-left (BL):   (-1, height).

7. The method of claim 5 or 6, wherein the one or more second reconstructed blocks comprise one or more of the following:

- one or some or all reconstructed blocks between the above-left reconstructed block (AL) and the above reconstructed block (A),
- one or some or all reconstructed blocks between the above-left reconstructed block (AL) and the left reconstructed block (L).

8. The method of any one of claims 5 to 7, wherein the one or more second reconstructed blocks comprise one or more of the following:

- a reconstructed block (AL2) adjacent to a first side of the block, e.g., above the block, and to the above-left reconstructed block (AL) and reconstructed blocks (AML, AMR) adjacent to a center of the first side of the block,
- a reconstructed block (AL3) adjacent to a second side of the block, e.g., left of the block, and to the above-left reconstructed block (AL) and reconstructed blocks (LMA, LMB) adjacent to a center of the second side of the block.

9. The method of any one of claims 5 to 7, wherein

the one or more second reconstructed blocks comprise one or more of the following:

- a reconstructed block (AL2) adjacent to a first side of the block, e.g., above the block, and to the above-left reconstructed block (AL),
- a reconstructed block (AL3) adjacent to a second side of the block, e.g., left of the block, and to the above-left reconstructed block (AL), or

wherein the one or more second reconstructed blocks comprise one or more of the following:

- reconstructed blocks (AML, AMR) adjacent to a center of a first side of the block, e.g., above the block,
- reconstructed blocks (LMA, LMB) adjacent to a center of a second side of the block, e.g., left of the block.

10. The method of any one of the preceding claims, wherein up to five third IPMs are added to the first IPMs.

11. The method of claim 10, wherein only a subset of the up to five third IPMs are added to the first IPMs by adding a third IPM when the weight of the third IPM is larger than or equal to a certain threshold, the certain threshold is a predefined fraction of a maximum weight of the weights of the five third IPMs.

12. The method of any one of the preceding claims, wherein the third IPMs are decoder side intra mode derivation (DIMD) modes.

13. The method of any one of the preceding claims, wherein the IPM list is a most probable mode (MPM) list having a predefined number of entries, e.g., 22 entries.

14. A non-transitory computer-readable storage medium comprising instructions which, when executed by a computer, cause the computer to carry out the method of any one of the preceding claims.

15. An apparatus of processing one or more blocks of a picture, the apparatus comprising:

a processing module, wherein the processing module is configured to select an intra prediction mode (IPM) from an IPM list, and use the selected IPM for predicting a block of the picture,
wherein the processing module is configured to generate the IPM list by adding to one or more first IPMs one or more second IPMs and/or three or more third IPMs,
wherein the one or more first IPMs are from one or more first reconstructed blocks at respective corners of the block,
wherein the one or more second IPMs are from one or more second reconstructed blocks adjacent to the block, and
wherein the third IPMs have highest amplitudes among IPMs derived from reconstructed neighboring samples.

Fig. 1

Fig. 2

Fig. 3

Start MPM list
construction — S10

Add IPM from position L with offset (-1, height-1) — S12

Add IPM from position A with offset (width-1, -1) — S14

Add IPM from position AL with offset (-1, -1) — S16

Add IPM from position AR with offset (width, -1) — S18

Add IPM from position BL with offset (-1, height) — S20

Continue MPM list construction
by adding IPM from DIMD and
non-adjacent block — S22

Fig. 4

Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

S100

Fig. 5

```
┌────────────────────────────────────────────────────┐
│  Generating an intra prediction mode (IPM) list by     │──── S110
│  adding to one or more first IPMs one or more          │
│  second IPMs                                           │
└────────────────────────────────────────────────────┘
                        │
                        ▼
┌────────────────────────────────────────────────────┐
│  Selecting an IPM from the generated IPM list         │──── S112
└────────────────────────────────────────────────────┘
                        │
                        ▼
┌────────────────────────────────────────────────────┐
│  Using the selected IPM for predicting a block of the  │──── S114
│  picture.                                              │
└────────────────────────────────────────────────────┘
```

Fig. 6

Fig. 8

Fig. 9

Fig. 10

x
y

| AL | AL2 |  | AML | AMR |  | A | AR |

w/2

AL3

LMA

CU

h/2

LMB

L

height/h

BL

width/w

Fig. 11

S150 — Start MPM list construction

S152 — Add IPM from position L with offset (-1, height-1)

S154 — Add IPM from position A with offset (width-1, -1)

S156 — Add IPM from position AL with offset (-1, -1)

S158 — Add IPM from new position AL2 with offset (0, -1)

S160 — Add IPM from new position AL3 with offset (-1, 0)

Add IPM from new position LMA with offset (-1, height / 2 - 1)

S162

S164 — Add IPM from new position AML with offset (width / 2 - 1, -1)

S166 — Add IPM from new position LMB with offset (-1, height / 2)

S168 — Add IPM from new position AMR with offset (width / 2, -1)

S170 — Add IPM from position AR with offset (width, -1)

S172 — Add IPM from position BL with offset (-1, height)

Continue MPM list construction by adding IPM from DIMD and non-adjacent block — S174

Fig. 12

Generating an intra prediction mode (IPM) list by adding to one or more first IPMs three or more third IPMs — S180

Selecting an IPM from the generated IPM list — S182

Using the selected IPM for predicting a block of the picture. — S184

Fig. 13

S186 — DIMD modes included in MPM list

S188 — i = 0

S190 — dimdMode = dimdModes[i]

S192 — dimdModesWeight[i] ≥ threshold

0

1

Add dimdMode to MPM — S194

S196 — dimdMode is the last mode from dimdModes

0

i = i + 1

S198

1

S200 — Continue MPM list construction by adding IPM non-adjacent block

Fig. 14

Decoding from the encoded data stream the picture

Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

S500

S502

Fig. 15

Receiving an original picture — S600

Encoding the picture into an encoded data stream

Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

S602

S604

Including into a data stream an indication concerning the use of the IPM list

S608

Fig. 16

Processing Module

Selecting an intra prediction mode (IPM) from an IPM list, and using the selected IPM for predicting a block of the picture, wherein the IPM list is generated by adding to one or more first IPMs one or more second IPMs and/or three or more third IPMs, wherein the one or more first IPMs are from one or more first reconstructed blocks at respective corners of the block, wherein the one or more second IPMs are from one or more second reconstructed blocks adjacent to the block, and wherein the third IPMs have highest amplitudes among IPMs derived from reconstructed neighboring samples.

402

404

400

Fig. 17

```
┌─────────────────────────────────────────────────────┐
│  ┌───────────────────────────────────────────────┐  │
│  │                                               │  │
│  │              Decoder module                   │  │
│  │                                               │  │
│  │                                       502     │  │
│  └───────────────────────────────────────────────┘  │
│                                                     │
│  ┌───────────────────────────────────────────────┐  │
│  │                                               │  │
│  │             Processing module                 │  │
│  │                                               │  │
│  │                                       504     │  │
│  └───────────────────────────────────────────────┘  │
│                                            500      │
└─────────────────────────────────────────────────────┘
```

Fig. 18

Encoder module

602

Processing module

604

600

Fig. 19

Fig. 20

900

901
computing unit

902
ROM

903
RAM

904

905
I/O interface

906
input unit

907
output unit

908
storage unit

909
communica-tion unit

Fig. 21

## EUROPEAN SEARCH REPORT

**Application Number**

EP 24 31 5569

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/201281 A1 (LI JINGYA [DE] ET AL) 23 June 2022 (2022-06-23) * figures 10-11,13 * * paragraph [0049] - paragraph [0066] * ----- | 1-15 | INV. H04N19/11 H04N19/176 H04N19/593 |
| A | COBAN M ET AL: "Algorithm description of Enhanced Compression Model 14 (ECM 14)", 35. JVET MEETING; 20240712 - 20240719; SAPPORO; (THE JOINT VIDEO EXPLORATION TEAM OF ISO/IEC JTC1/SC29/WG11 AND ITU-T SG.16 ), , no. JVET-AI2025 21 October 2024 (2024-10-21), XP030323411, Retrieved from the Internet: URL:https://jvet-experts.org/doc_end_user/ documents/35_Sapporo/wg11/JVET-AI2025-v1.z ip JVET-AI2025-v1.docx [retrieved on 2024-10-21] * section 3.1.3 Primary and Secondary MPM * * section 3.1.5 Decoder Side intra mode derivation (DIMD) * ----- | 1-15 | |
| A | US 2020/169752 A1 (RATH GAGAN [FR] ET AL) 28 May 2020 (2020-05-28) * paragraph [0069]; figures 5-10 * * paragraph [0083] * ----- | 1-15 | TECHNICAL FIELDS SEARCHED (IPC) H04N |
| A | WO 2024/131931 A1 (MEDIATEK INC [CN]) 27 June 2024 (2024-06-27) * paragraph [0116]; figure 15 * ----- | 1-15 | |
| A | WO 2024/141695 A1 (NOKIA TECHNOLOGIES OY [FI]) 4 July 2024 (2024-07-04) * paragraph [0121] - paragraph [0128] * ----- | 1-15 | |

The present search report has been drawn up for all claims

| Place of search | Date of completion of the search | Examiner |
|---|---|---|
| Munich | 13 May 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5569

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2025

| Patent document cited in search report | Publication date | Patent family member(s) | | Publication date |
|---|---|---|---|---|
| US 2022201281 A1 | 23-06-2022 | NONE | | |
| US 2020169752 A1 | 28-05-2020 | CN | 110786015 A | 11-02-2020 |
| | | EP | 3399754 A1 | 07-11-2018 |
| | | EP | 3619916 A1 | 11-03-2020 |
| | | US | 2020169752 A1 | 28-05-2020 |
| | | WO | 2018202558 A1 | 08-11-2018 |
| WO 2024131931 A1 | 27-06-2024 | NONE | | |
| WO 2024141695 A1 | 04-07-2024 | NONE | | |

EPO FORM P0459

For more details about this annex : see Official Journal of the European Patent Office, No. 12/82